# EUROPEAN PATENT SPECIFICATION

(11) **EP 0 502 676 B1**
(45) Date of publication and mention of the grant of the patent: **17.09.1997**
(21) Application number: 92301769.3
(22) Date of filing: 02.03.1992
(51) Int. Cl.: C08K 7/10, C08L 81/02

(54) **Reinforced polyarylene sulfide resin composition and molding product thereof**
Verstärkte Polyarylensulfid-Harzzusammensetzung und daraus geformte Produkte
Composition de sulfure de polyarylène renforcée et produits moulés à partir de cette composition

(30) Priority: 05.03.1991 JP 38511/91
(43) Date of publication of application: 09.09.1992
(73) Proprietor: POLYPLASTICS CO. LTD., Chuo-Ku Osaka-shi Osaka 541 (JP)
(72) Inventor: Nakai, Mikio, Fuji-shi, Shizuoka (JP)
(74) Representative: W.P. THOMPSON & CO.

(56) References cited:
- GB-A- 2 114 586
- WORLD PATENTS INDEX LATEST Derwent Publications Ltd., London, GB; AN 91-077437; & JP-A-3 024 159 (TORAY IND INC) 1 February 1991 (A )
- WORLD PATENTS INDEX LATEST Derwent Publications Ltd., London, GB; AN 90-302788; & JP-A-2 215 506 (DAINIPPON INK CHEM) 28 August 1990 (A )

## Description

The present invention concerns a reinforced polyarylene sulfide resin composition and a molding product thereof. More particularly, the present invention concerns a polyarylene sulfide resin composition producing a molding product with good surface and excellent surface luster, as well as excellent heat resistance and moldability and also excellent mechanical properties. The invention especially relates to materials suitable for parts of automobiles, electric or electronic equipment, etc., which are required to have heat resistance, mechanical properties and surface smoothness, for example, lamp reflectors.

In recent years, thermoplastic resins having high heat resistance and chemical resistance, as well as flame retardancy have been demanded for materials used for electric or electronic equipment parts, materials for automobile equipment parts and materials for chemical equipment parts. A polyarylene sulfide resin typically repres-ented by a polyphenylene sulfide (PPS) resin is one such resin capable of satisfying the above-mentioned requirements and demand therefor has been increased. However, since the resin is somewhat expensive and fragile when used alone, it has been generally practised to improve its mechanical properties and the like by blending it with a fibrous reinforcing agent such as glass fibers and carbon fibers or other fillers.

However, blending of such generla inorganic fillers, particularly fibrous reinforcing agents such as glass fibers and carbon fibers providing a remarkable effect for improving the mechanical strength, involves a significant drawback of worsening the flow properties and greatly deteriorating the smoothness at the surface of the molding products thereby making the surface luster poor. In view of the above, there has been a keen demand for reinforced resin compositions which are excellent in the effect of enhancing the moldability and the mechanical strength of a polyarylene sulfide resin and capable of providing molding products having excellent surface smoothness, surface luster and the like, but those capable of satisfying the object can not yet be obtained.

The Derwent abstract of JP-A-3024159 discloses a heat and chemical resistant polyarylene sulphide resin and a ceramic fiber. No details are given about the composition of the fiber.

GB-A-2114586 discloses a friction lining containing a phenolic resin and mineral fibers consisting of SiO₂, Al₂O₃ and CaO. The lining may also contain MgO.

The Derwent abstract of JP-A-2215506 discloses a resin composition consisting of a polyphenylene resin and a ceramic fiber reinforcement. No details about the fiber composition are disclosed.

In view of the foregoing problems, it is an object of the present invention to provide a reinforced polyarylene sulfide resin material of excellent moldability, having excellent mechanical properties and heat resistance, as well as providing a smooth surface and excellent luster when it is prepared as a molding product.

The present inventors have made a study for solving the foregoing problem and, as a result, have found that the poor surface state of existing molding products based on a fiber-reinforced composition comprising a polyarylene sulfide resin as the main ingredient and using glass fibers or carbon fibers is attributable to the fibrous material used as the reinforcing agent, and have made an extensive search and study for a fibrous material causing no such surface roughening and having a reinforcing effect. As a result, the inventors have accomplised the present invention based on the finding that specific mineral fibers or ceramic fibers shown below are extremely effective.

The present invention provides a reinforced resin composition comprising
(A) a polyarylene sulfide resin, characterised in that it also contains:
   for every 100 parts by weight of the polyarylene sulfide resin (A),
(B) from 1 to 200 parts by weight of mineral fibers and/or ceramic fibers having a chemical composition comprising 35 to 50 wt% of SiO₂, 8 to 20 wt% of Al₂O₃, 10 to 40 wt% of CaO and 3 to 20 wt% of MgO, represented as oxide;
wherein the mineral fibers and/or ceramic fibers (B) have an average diameter of 2 to 10 µm and an average fiber length of 50 to 800 µm.

The invention also provides a molding product with a good surface state prepared by molding a reinforced polyarylene sulfide resin according to the invention.

The polyarylene sulfide resin as the ingredient (A) in the composition according to the present invention mainly comprises the repeating unit -(-Ar-S-)- (in which Ar is arylene group). As the arylene group (-Ar-) there can be used, for example, p-phenylene group, m-phenylene group, o-phenylene group, substituted phenylene group (in which the substituent is an alkyl group, preferably C₁ - C₅ alkyl group or a phenylene group), p,p'-diphenylene sulfone group, p,p'-biphenylene group, p,p'-diphenylene ether group, p,p'-diphenylene carbonyl group and naphthalene group.

In this case, among arylene sulfide groups having the arylene groups as described above, a polymer using identical repeating units, that is, a homopolymer may be used. Further, in view of the processability for the composition, a copolymer containing different kinds of repeating units may be preferred depending on the case.

As the homopolymer, a substantially linear homopolymer containing, as the repeating unit, p-phenylene sulfide groups using the p-phenylene group as the arylene group is particularly preferably used.

As the copolymer, a combination of two or more of different kinds of the arylene sulfide groups comprising the arylene group as described above can be used. In particular, a combination mainly composed of p-phenylene sulfide group and containing m-phenylene sulfide group, is particularly preferably used. Among them, a substantially linear copolymer containing more than 60 mol%, preferably more than 70 mol%, of p-phenylene sulfide groups is appropriate in view of physical properties such as heat resistance, moldability and mechanical properties. In this case, a copolymer containing the repeating units of the component not at random but in a block-forms (for example, as described in Japanese Patent Laid-Open Specification 14228/1986) has good processability and excellent heat resistance and mechanical properties and is preferably used.

For the polyarylene sulfide resin as the ingredient (A) used in the present invention, a polymer obtained from a relatively low molecular weight linear polymer by increasing the melt viscosity under oxidizing crosslinking or thermal crosslinking thereby improving the moldability can be used, but a substantially linear high molecular weight polymer obtained from difunctional monomers by polycondensation can also be used. In most cases, the latter substantially linear polymer has higher physical properties for the resultant molding product and is preferred.

Further, as the polyarylene sulfide resin according to the present invention, it is also possible and suitable to use a crosslinked polyarylene sulfide resin polymerized by using, in admixture, as the monomer, monomers having three or more functional groups, or a blend resin prepared by blending the same with the linear polymer described above, in addition to the polymer described above.

The reinforcing agent used as the ingredient (B) in the present invention is mineral fibers and/or ceramic fibers having a specified chemical composition, comprising, as oxides, 35 to 50 wt% of SiO₂, 8 to 20 wt% of Al₂O₃, 10 to 40 wt% of CaO and 3 to 20 wt% of MgO and, further, it may contain less than 10 wt% of FeO or an ingredient such as TiO₂, MnO, Na₂O and K₂O each by less than 3 wt%. In accordance with the present invention, a molding product capable of having a sufficient reinforcing effect on the mechanical properties of a molding product and, in addition, a remarkable improvement in the surface state of the molding product as compared with that of a molding product comprising fibrous reinforcing agent such as glass fibers and carbon fibers used generally, is obtained by blending the mineral fibers and/or ceramic fibers comprising the chemical composition described above.

If the amounts of the ingredients as the reinforcing agent are out of the range as defined in the present invention, at least one of the mechanical properties and the surface state of the molding product is worsened. For instance, if the SiO₂ content exceeds 50% by weight, the property approaches to that of usual glass fibers to worsen the surface state when it is prepared into a molding product. On the other hand, if it is less than 35% by weight, it tends to reduce the reinforcing effect on the mechanical properties. Further, also for Al₂O₃, CaO and MgO, if the content is excessive or insufficient, the reinforcing effect on the mechanical properties is reduced, or the effect on the surface state of the molding product is not sufficient, and the handlability, moldability, heat resistance and the like upon preparation may not be preferred depending on the case.

Further, in the present invention, the mineral fibers or ceramic fibers as the ingredient (B) have an average fiber diameter within a range of 2 to 10 µm and an average fiber length within a range of 50 to 800 µm and, preferably, an average diameter of 4 to 8 µm and an average fiber length of 150 to 800 µm. Those with smaller fiber diameters are difficult to be prepared, whereas those of excessively large diameters reduce the effect of reinforcing the mechanical properties. Further, if the fiber length is insufficient, the reinforcing effect is also reduced. On the other hand, if it is excessive, it hinders the flow properties of the composition and it is not preferred in view of the moldability. In addition, the surface state of the molding product is insufficient.

The fibrous reinforcing agent used as the ingredient (B) in the present invention can be prepared as fibers containing the above-mentioned chemical ingredients by melting and purifying specific natural rocks, for example, igneous rocks such as basalt, or blast furnace slags by-produced upon iron making, spinning and then forming them into fibers of a desired diameter. Then, they are chopped or cut by an appropriate chopper or cutter and may be used as they are while partially containing powdery material. If required, they may be classified after cutting to selectively use those with an appropriate fiber length. The mineral fibers or ceramic fibers as such ingredient (B) can be available from marketed products, for example, "LAPINUS ROCKFIL" trade name of products manufactured by ROCKWOOL LAPINUS B. V., or "S-FIBERS-FF" trade name of products manufactured by Shin Nippon Seitetsu Co. Ltd..

The reinforcing agent as the ingredient (B) used in the present invention may be used as it is, but it may be used after being given a surface treatment or gathering treatment by using a known surface treating agent, for example, an organosilane compound, an organoborane compound, an epoxy compound or an organo-titanate compound and a coupling agent such as an isocyanate compound. The surface treating agents may be added simultaneously with the preparation of the composition. In particular, surface treatment with, or addition of an amino alkoxy silane, epoxy alkoxy silane, vinyl alkoxy silane or mercapto alkoxy silane is effective on the mechanical properties.

Further, for the reinforcing agent of the ingredient (B), those prepared by gathering using other appropriate organic materials for preventing fluffing and scattering upon preparation of the composition may also be used.

In the present invention, the content for the ingredient (B) is from 1 to 200 parts by weight, preferably 5 to 150 parts by weight based on 100 parts by weight of the polyarylene sulfide resin. If the blending amount of the ingredient (B) is insufficient, the effect for reinforcing the mechanical property is not sufficient. On the other hand, if it is excessive, the moldability is worsened and the surface state of the molding product is also worsened thereby making it difficult to attain the object of the present invention. Further, in the composition according to the present invention, additional use of a fibrous reinforcing agent other than the ingredient (B) is not precluded so long as this does not particularly hinder the object of the present invention. For instance, it is possible to use a small amount of organic polymer fibers having high melting point such as fluoro resin fibers, aromatic polyamide fibers and potassium titanate fibers together. However, since the combined use of the glass fibers or carbon fibers used generally as the reinforcing agent for the polyarylene sulfide resin has an effect of remarkably worsening the surface state of the molding product as described above and results in a trouble to attain the object of the present invention, it is desirable not to use them in combination and, if they are used in combination, use should be restricted to an extremely small content, for instance, to less than 1/5 of the mineral fibers or ceramic fibers as the ingredient (B).

In the composition according to the present invention, a powdered and/or granulated filler (including hollow) or a plate-like filler can be blended further as the ingredient (C) together with the ingredient (B), although it is not essential. Such filler (C) is preferably used together with the ingredient (B) in view of eliminating the anisotropy in the shrinkage and suppressing warping deformation upon molding to improve the dimensional accuracy or improving the electric property and heat resistance. Any among powdery, granular, spherical, hollow and plate-like shapes may be used together with the ingredient (B), possibly two or more kinds of them may be used, depending on the purpose.

The combined use of the filler (C) does not affect the surface state so much in the molding product and it is effective for making a good balance among the physical properties as described above in the desired molding product.

As examples of the ingredient (C), there can be mentioned as powdery and granular fillers, for example, silicates such as molten silica, quartz powder, glass beds, glass powder, calcium silicate, aluminum silicate, kaolinite, talc, clay, diatomaceous earth and wollastonite, metal oxides such as iron oxide, titanium oxide and alumina, metal carbonates such as calcium carbonate and magnesium carbonate, metal sulfates such as calsium sulfate and barium sulfate, as well as silicone carbide, silicon nitride, boron nitride and a powdery and granular particle of SiO₂-Al₂O₃ compound identical with or different from the ingredient (B).

As the plate-like filler, there can be mentioned, for example, mica, glass flake and talc. Further, as the hollow filler, there can be mentioned, for example, siras balloon, metal balloon, glass balloon, SiO₂-Al₂O₃ series hollow particles.

The average particle size of the filler (C) is less than 20 µm, preferably less than 10 µm for the general powdery and granular particles, and less than 50 µm, preferably less than 40 µm for the spherical or flat-type material. If the above-mentioned size limit of the filler (C) is exceeded, the surface state of the molding product tends to be worsened, depending on the shape of the filler, and it is not preferred in view of the surface state of the molding product aimed at in the present invention.

Further, the blending amount of the filler (C) is less than 150 parts by weight, preferably less than 130 parts by weight based on 100 parts by weight of the polyarylene sulfide resin. Further, the sum with the ingredient (B) is less than 250 parts by weight, preferably less than 200 parts by weight based on 100 parts by weight of the polyarylene sulfide. If the ingredient (C) or the sum of the ingredient (B) and the ingredient (C) is excessive, it results in a problem in the moldability and is not preferred also in view of the surface state of the molding product. The filler (C) may also be used as it is, but it may, alternatively, be used after having had a surface treatment by a coupling agent or being gathered by other organic compound in the same manner as for the ingredient (B).

In the composition according to the present invention, other thermoplastic resins can be blended additionally in a small amount within a range not departing from the object of the invention and they include, for example, vinyl resins such as polyvinyl chloride resin and polyvinylidene chloride resin, polycarbonate resin, polyamide resin, polyimide resin, polyolefin resin, polyester resin, polyether resin, polysulfone resin, epoxy resin, natural rubber and synthetic rubber. Further, additives such as flame retardant, antioxidant, UV-ray inhibitor, lubricant, releasing agent, nucleating agent, foaming agent, cross-linker and colorant may be added as required.

The composition according to the present invention can be prepared by various known preparation methods by melting and kneading. For instance, it is a general procedure to previously mix required ingredients uniformly by a mixer such as a tumbler and Henschel mixer, supply the mixture to a one-shaft or two-shaft extruder and pelletize by melt kneading and then serve the same to molding. Upon pelletization, the ingredient (B) and, if required, the ingredient (C) may be added to the ingredient (A) once melted in the extruder, and this method is effective for preventing the flexing of the fibrous material. Further, it is possible to mix the required ingredients, directly supply the mixture to a molding machine and mold them as they are after melt kneading.

As shown in the foregoing descriptions, since the composition according to the present invention has excellent moldability, heat resistance and mechanical property, has an extremely improved surface state such as smoothness and luster, particularly, in a case when it is prepared into a molding product, as compared with compositions blended with known glass fibers or known carbon fibers as the fibrous reinforcing agent for a polyarylene sulfide resin, it can be used suitably to various kinds of materials for equipments requiring such satisfactory appearance and properties, for example, parts of equipments aiming for optical reflection, etc.

Further, such a surface state is also effective for attaining a smooth surface state in the case of coating a thin film on the surface of molding products such as coating, sputtering, plating, vacuum evaporation coating and ion plating.

The present invention will now be described more specifically referring to examples, but the invention is not restricted only to them.

### Examples 1 - 12, Comparative Examples 1 - 9

Pellets of a polyolefin sulfide resin composition were prepared by adding a reinforcing agent (B) of the present invention and (B') for comparison whose chemical compositions are as shown in Table 1 and, if necessary, a powdery and granular filler or a pellet-like filler (C) to a polyphenylene sulfide resin (PPS) (the formulations are given in Tables 2 and 3), well mixing them in a blender, melt kneading the mixture in an extruder at a cylinder temperature of 310°C. Then, test pieces were molded by an injection molding machine at a cylinder temperature of 320°C and a die temperature of 150°C and physical values (tensile strength and elongation, bending property) thereof were measured.

Further, for measuring the smoothness at the surface of the molding products, a flat plate of 120 mm x 120 mm x 3 mm was molded by using an injection molding machine at a cylinder temperature of 320°C and a die temperature of 150°C, and a clearness of reflection light thereof was measured by using a image reflecting measuring device (manufactured by Suga Shikenki). That is, light was entered at an angle of 45° to a specimen molding plate, reflected light at 45° was allowed to pass through an optical comb of 1.0 mm width, the maximum value M in the bright portion and the minimum value m in the dark portion for the transmission light passed through the optical comb were measured by a light receiving device, to determine the image clearness (%) in accordance with the following equation.
Light source: tungsten filament,
Light wavelength: 400 to 700 nm$\text{Image clearness (%) =} \frac{\text{M - m}}{\text{M + m}} \text{x 100}$

A greater value shows that the clearness is high and the specimen plate is smooth. On the other hand, if the value is small, it shows that "blur" or "distortion" is caused and the surface of the specimen plate is coarse.

The results are shown in Tables 2 and 3.

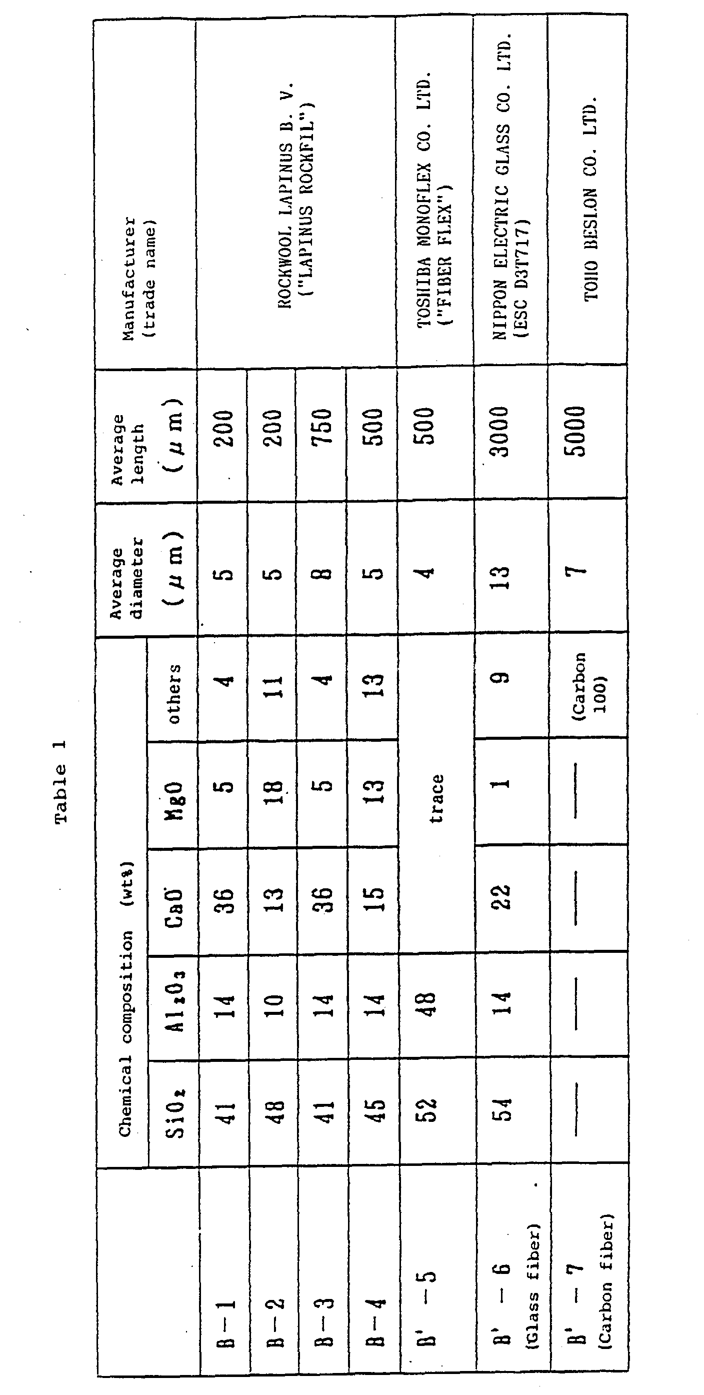

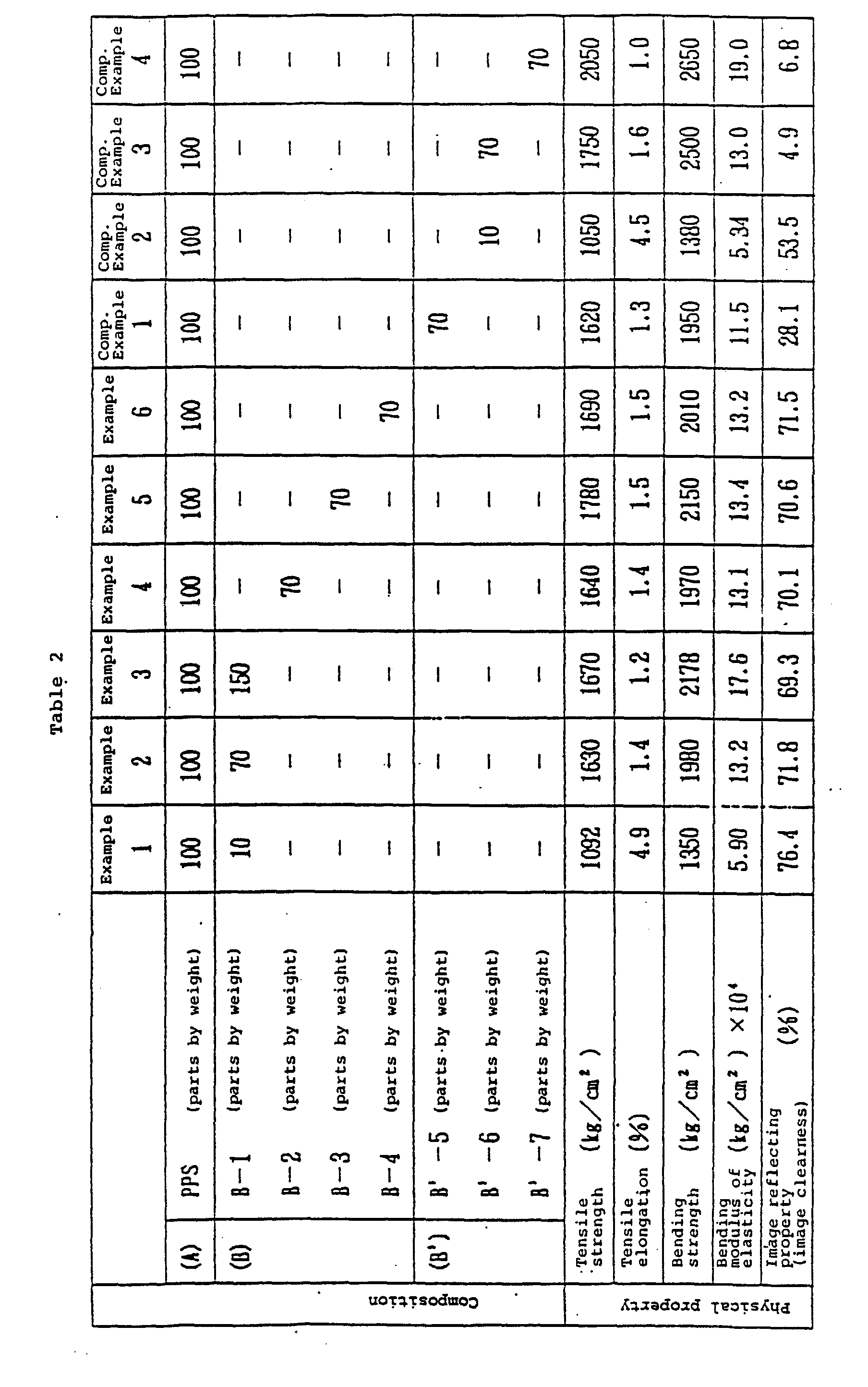

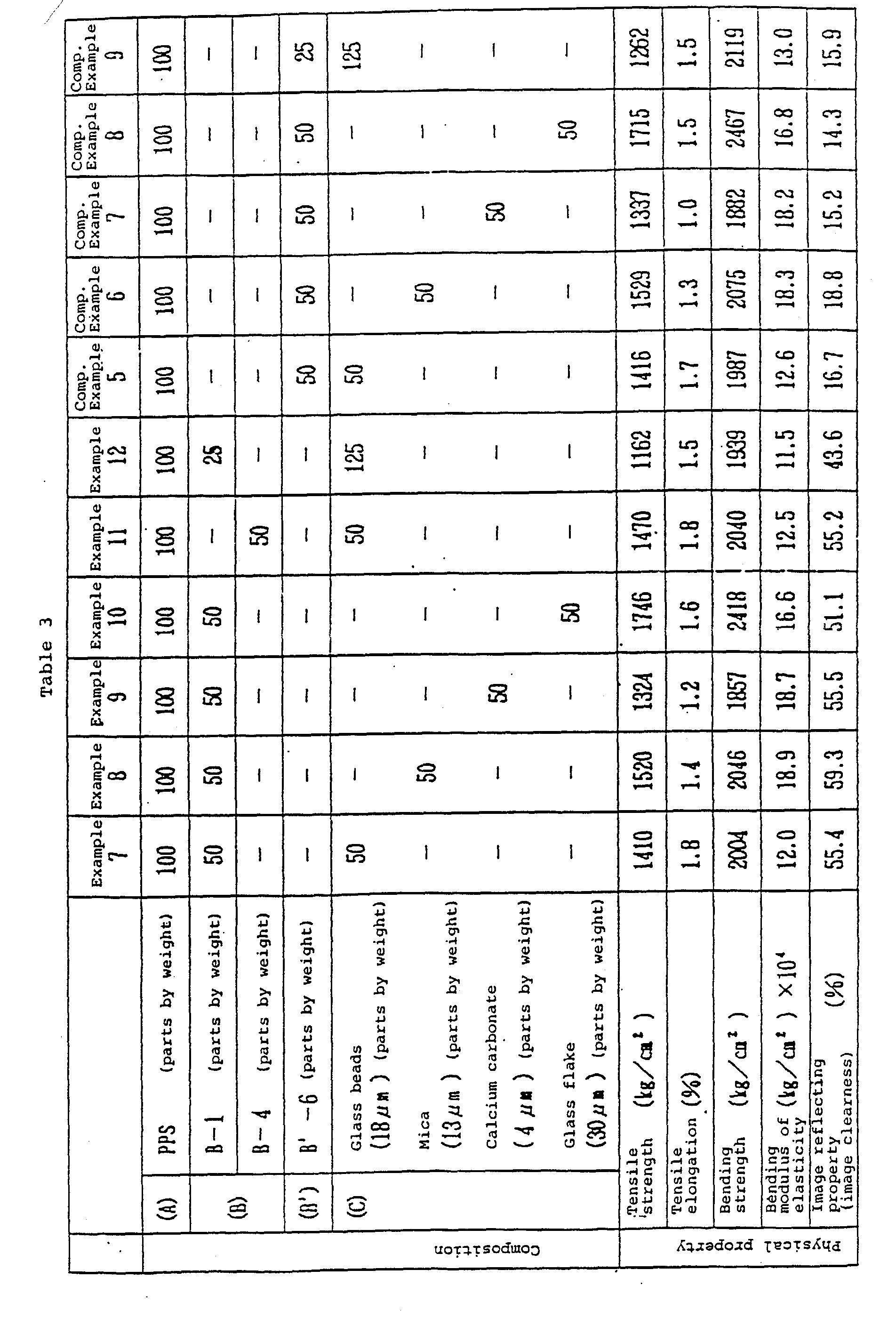

## Claims

1. A reinforced resin composition comprising
(A) a polyarylene sulfide resin, characterised in that it also contains:
for every 100 parts by weight of the polyarylene sulfide resin (A),
(B) from 1 to 200 parts by weight of mineral fibers and/or ceramic fibers having a chemical composition comprising 35 to 50 wt% of SiO₂, 8 to 20 wt% of Al₂O₃, 10 to 40 wt% of CaO and 3 to 20 wt% of MgO, represented as oxide;
wherein the mineral fibers and/or ceramic fibers (B) have an average diameter of 2 to 10 µm and an average fiber length of 50 to 800 µm.

2. A composition as claimed in claim 1, further comprising (C) 1 to 150 parts by weight of a powdered and/or granulated filler having an average particle size of less than 20 µm and/or a spherical or plate-like filler having an average particle size of less than 50 µm, based on 100 parts by weight of the polyarylene sulfide resin (A), the total amount of fibers (B) and filler (C) being less than 250 parts by weight per 100 parts by weight of resin (A).

3. A molding product with a good surface state prepared by molding a reinforced polyarylene sulfide resin composition as claimed in claim 1 or 2.

## Patentansprüche

1. Verstärkte Harzzusammensetzung, umfassend (A) ein Polyarylensulfidharz,
dadurch **gekennzeichnet**, daß
sie ebenfalls für alle 100 Gew.Teile des Polyarylensulfidharzes (A), (B) von 1 bis 200 Gew.Teile Mineralfasern und/oder Keramikfasern mit einer chemischen Zusammensetzung umfaßt, enthaltend 35 bis 50 Gew.% SiO₂, 8 bis 20 Gew.% Al₂O₃, 10 bis 40 Gew.% CaO und 3 bis 20 Gew.% MgO, dargestellt als Oxid, worin die Mineralfasern und/oder Keramikfasern (B) einen durchschnittlichen Durchmesser von 2 bis 10 µm und eine durchschnittliche Faserlänge von 50 bis 800 µm haben.

2. Zusammensetzung nach Anspruch 1, weiterhin umfassend (C) 1 bis 150 Gew.Teile eines pulverförmigen und/oder granulierten Füllstoffes mit einer durchschnittlichen Teilchengröße von weniger als 20 µm und/oder eines sphärischen oder plättchenartigen Füllstoffes mit einer durchschnittlichen Teilchengröße von weniger als 50 µm, bezogen auf 100 Gew.Teile des Polyarylensulfidharzes (A), wobei die Gesamtmenge der Fasern (B) und des Füllstoffes (C) weniger als 250 Gew.Teile pro 100 Gew.Teile des Harzes (A) ist.

3. Formprodukt mit einem guten Oberflächenzustand, hergetellt durch Formen einer verstärkten Polyarylensulfid-Harzzusammensetzung wie in Anspruch 1 oder 2 beansprucht.

## Revendications

1. Une composition de résine renforcée comprenant
(A) une résine de polysulfure d'arylène, caractérisée par le fait qu'elle contient également :
pour 100 parties en poids de la résine de polysulfure d'arylène (A),
(B) 1 à 200 parties en poids de fibres minérales et/ou de fibres céramiques ayant une composition chimique comprenant 35 à 50 % en poids de SiO₂, 8 à 20 % en poids de Al₂O₃, 10 à 40 % en poids de CaO et 3 à 20 % en poids de MgO, exprimée en oxydes ;
dans laquelle les fibres minérales et/ou les fibres céramiques (B) ont un diamètre moyen de 2 à 10 µm et une longueur moyenne de fibres de 50 à 800 µm.

2. Une composition telle que revendiquée dans la revendication 1, comprenant de plus (C) 1 à 150 parties en poids d'une charge pulvérulente et/ou granulaire ayant une taille moyenne de particules inférieure à 20 µm et/ou une charge sphérique ou lamellaire ayant une taille moyenne de particules inférieure à 50 µm, sur la base de 100 parties en poids de la résine de polysulfure d'arylène (A), la quantité totale de fibres (B) et de charge (C) étant inférieure à 250 parties en poids pour 100 parties en poids de résine (A).

3. Un produit moulé ayant un bon état de surface préparé en moulant une composition de résine de polysulfure d'arylène renforcée telle que revendiquée dans la revendication 1 ou 2.
